# EUROPÄISCHE PATENTSCHRIFT

(11) **EP 3 636 714 B1**
(45) Veröffentlichungstag und Bekanntmachung des Hinweises auf die Patenterteilung: **28.02.2024**
(21) Anmeldenummer: 18200032.3
(22) Anmeldetag: 12.10.2018
(51) Int. Cl.: C08L 77/02, F01P 3/20, F01P 3/00, F01P 11/02, F01P 11/04, B29C 45/00

(54) **THERMOPLASTISCHE BAUTEILE FÜR DIE VERWENDUNG IN KÜHLKREISLÄUFEN**
THERMOPLASTIC COMPONENTS FOR USE IN COOLING CIRCUITS
COMPOSANTS THERMOPLASTIQUES DESTINÉS À ÊTRE UTILISÉS DANS DES CIRCUITS DE REFROIDISSEMENT

(43) Veröffentlichungstag der Anmeldung: 15.04.2020
(73) Patentinhaber: AKRO-PLASTIC GmbH, 56651 Niederzissen (DE)
(72) Erfinder: Fischer, Bianca, 56626 Andernach (DE); Neidhöfer, Thorsten, 56743 Mendig (DE); Neuß, Oliver, 50374 Erftstadt (DE); Stier, Thilo, 53859 Niederkassel (DE)
(74) Vertreter: dompatent von Kreisler Selting Werner - Partnerschaft von Patent- und Rechtsanwälten mbB

(56) Entgegenhaltungen:
- EP-A1- 0 997 496
- EP-A1- 1 570 970
- WO-A1-2010/128013
- DE-A1-102011 086 274

## Beschreibung

Die vorliegende Erfindung betrifft thermoplastische Bauteile umfassend Polycaprolactam und Polypropylen sowie deren Verwendung in Kühlkreisläufen, insbesondere in Automobilen.

Zumeist werden für Bauteile in Kühlkreisläufen Polymere aus der Gruppe der Polyamide ausgewählt, wobei es in speziellen Anwendungsbereichen wünschenswert ist, dass die Bauteile gegenüber hydrolytischem Abbau auch bei Temperaturen oberhalb von 100 °C unempfindlich sind, was insbesondere dann von Bedeutung ist, wenn die Bauteile in direkten Kontakt mit Kühlmedien kommen.

Unter hydrolytischem Abbau versteht der Fachmann in diesem Zusammenhang die Spaltung der in der Polymerkette vorhandenen Amidgruppen unter Wassereinwirkung, welche mit einer signifikanten Reduzierung der Polymereigenschaften, insbesondere der mechanischen Eigenschaften des Werkstoffs und damit der aus diesem hergestellten Bauteile einhergeht. Bei Bauteilen im Kühlkreislauf eines Automobils wird häufig auch von Glycolyse gesprochen, da als Kühlmedium in der Regel eine Mischung aus Wasser und Ethylenglycol zum Einsatz kommt, jedoch sind die Reaktionen im Kühlkreislauf nicht voneinander zu trennen. Beide Reaktionen laufen bei Raumtemperatur sehr langsam ab, bei den Einsatzbedingungen in Kraftfahrzeugen jedoch sehr schnell, weshalb es nötig ist, die Polymere gegen diesen Abbau zu stabilisieren.

Die Stabilisierungswirkung bzw. die ausreichende Stabilität der stabilisierten Polymere gegen hydrolytischen Abbau wird vom Fachmann durch Lagerung genormter Prüfstäbe (z.B. Zugstäbe entsprechend ISO 527) in einem wie oben beschriebenen Kühlmedium bei erhöhter Temperatur überprüft. Hierfür werden die Prüfstäbe meist in einem geeigneten Druckbehälter teilweise oder vollständig in das Kühlmedium/Wasser-Gemisch (50/50) eingelegt und für eine Zeit von 500 bis 3000 Stunden, häufig 1000 Stunden einer Temperatur von bis zu 135 °C ausgesetzt. Der Abfall der mechanischen Eigenschaften gegenüber dem Ausgangszustand des Polymers wird durch Überprüfung der mechanischen Eigenschaften der wie zuvor beschrieben gelagerten Prüfstäbe ermittelt. Gängige Prüfverfahren zur Charakterisierung der mechanischen Eigenschaften von Polymeren sind z.B. in den internationalen Normen ISO 527, ISO 178, ISO 179 und ISO 180 beschrieben.

Je nach Bauteil sind die Anforderungen bezüglich des Erhalts der mechanischen Eigenschaften nach Lagerung im Kühlmedium/Wasser-Gemisch (50/50) unterschiedlich. Für viele Anwendungen wird ein Werkstoff als geeignet angesehen, wenn die Biegefestigkeit der Prüfstäbe nach Lagerung (1000 Stunden /135 °C im Kühlmedium) einen Wert von mindestens 25 MPa oder die Bruchdehnung der Prüfstäbe unter Zugbelastung nach Lagerung (1000 Stunden /135 °C im Kühlmedium) einen Wert von mindestens 1% erreicht.

Alternativ werden die Bauteile aus dem Werkstoff einer Berstdruckprüfung nach Lagerung im Kühlmedium (entsprechende Temperatur und Lagerungsdauer) unterzogen. Jedoch wird meist die Prüfung genormter Prüfkörper vorgezogen, weil nur so mit geringem Aufwand Ergebnisse mit guter Vergleichbarkeit erzielt werden. Für teilaromatische Polyamide und für Polyamid 66 ist bekannt, wie die geforderte Stabilisierung ausgeführt werden kann. Als spezielle Stabilisatoren zur Verbesserung der Hydrolysebeständigkeit werden monomere, oligomere oder polymere Carbodiimide (WO2017189761A1, DE4214193A1, EP2933285A1, US5360888A, US20070066727A1) und auch sekundäre Amine (Becker, G. W., Braun, D., Bottenbruch, L., Binsack, R., Polyamide, Kunststoff Handbuch 314, Technische Thermoplaste, Carl Hanser Verlag, München, 1998*)* bzw. Mischungen verschiedener Substanzen eingesetzt. Nachteilig bei der Verwendung von teilaromatischen Polyamiden und Polyamid 66 ist jedoch der vergleichsweise hohe Preis dieser Polymere gegenüber anderen gängigen Polymeren.

Aufgabe der hier vorliegenden Erfindung ist es daher, ein Bauteil für Kühlkreisläufe bereitzustellen, das die Anforderungen bezüglich Hydrolysestabilität für Bauteile im Kühlkreislauf eines Automobils und die Nachteile des Standes der Technik, insbesondere aus wirtschaftlicher Sicht überwindet.

Aus EP 2 562 220 A1 ist bekannt, dass Polyamide, die mit einem Copolymeren aus einem Olefin und einem Acrylsäureester gemischt werden sowie weitere Stabilisatoren enthalten ausreichend hydrolysestabil für Anwendungen im Kühlkreislauf von Automobilen sind. Jedoch werden auch in dieser Patentschrift lediglich Beispiele auf Basis von Polyamid 66 beschrieben. EP 0 997 496 beschreibt eine schweißbare Harzzusammensetzung, die 100 Gewichtsteile eines Nylonharzes als Komponente A, 0,1 bis 50 Gewichtsteile eines Polyolefinharzes als Komponente B und 10 bis 150 Gewichtsteile Glasfasern als Komponente C umfasst, die vermischt sind. WO 2010/128013 offenbart eine Polyamid-Formmasse enthaltend wenigstens A) 20 bis 94,9 Gew.-% eines thermoplastischen Polyamids, B) 2 bis 40 Gew. % wenigstens eines Polymerisats des Propylens, C) 0,1 bis 10 Gew.-% wenigstenseines Verträglichkeitsvermittlers aus der Reihe der Propfcopolymere des Propylens und D) 0,01 bis 30 Gew.-% eines Leitfähigkeitsadditivs aus der Reihe Kohlenstofffasern und Carbon Nanotubes.

DE 10 2011 086 274 stellt eine leichte, verstärkte Kunststoff-Komposit-Zusammensetzung für einen Frontmodulträger vor, in der Glasfasern und Kohlenstofffasern als Versteifungsmittel in einer Harzmischung aus einem synthetisch hergestellten Kunststoffharz, wie einem Polyamid, und einem Vielzweck-Kunststoffharz,wie einem Polyalkylen, gegeben werden. Durch die offenbarte Komposit-Zusammensetzung soll ein umweltfreundliches Verbundmaterial zur Verfügung gestellt werden, das durch die Versteifung und die Gewichtsreduktion des Frontmodulträgers effektiv die Kohlenstoffdioxidemission reduzieren und die Kraftstoffeffizienz der Kraftfahrzeuge verbessern kann. EP 1 570 970 betrifft ein Verfahren zur Herstellung eines Mehrschicht-Hohlkörpers umfassend das aufeinander folgende Injizieren von mindestens zwei unterschiedlichen Formmassen in eine Form und anschließend Einleitung eines Druckfluids, wobei mindestens eine der verwendeten Formmassen einen gefüllten oder ungefüllten polymeren Hochtemperatur-Werkstoff enthält.

Im Rahmen der vorliegenden Erfindung wurde überraschenderweise gefunden, dass auch Polyamid 6 (PA 6) basierte Materialien geeignet sind, um die typischen Anforderungen der Automobilindustrie bezüglich Hydrolysebeständigkeit zu erfüllen. Dies ist umso erstaunlicher, da Polyamid 6 im Vergleich zu Polyamid 66 für einen deutlich ausgeprägteren hydrolytischen Abbau bekannt ist.

Gegenstand der vorliegenden Anmeldung ist daher ein Bauteil für Kühlkreisläufe, insbesondere im Automobilbereich, hergestellt aus einer Formmasse, die folgendes umfasst:
A. 20 bis 85 Gew.-% eines Polycaprolactams;
B. 5 bis 35 Gew.-% eines Polypropylens; und
C. 5 bis 65 Gew.-% eines Verstärkungsstoffes, dadurch gekennzeichnet, dass die Formmasse weiterhin Hydrolysestabilisatoren in einer Menge von 0,2 bis 3 Gew.-% enthält, wobei die Hydrolysestabilisatoren ausgewählt sind aus der Gruppe bestehend aus Carbodiimide und primären oder sekundären Aminen,
wobei sich die Angaben der Gew.-% jeweils auf das Gesamtgewicht der Formmasse beziehen.

Es wurde überraschend gefunden, dass die erfindungsgemäßen Bauteile eine ausreichende Hydrolysestabilität gegenüber den gängigen, im Automobilbereich verwendeten Kühlmitteln aufweisen und so in den entsprechenden Kühlkreisläufen verwendet werden können. Im Gegensatz zu herkömmlichen Bauteilen und Formmassen, kann bei dem erfindungsgemäßen Bauteil auf die Anwesenheit teurer Bestandteile wie Polymere auf Basis von Polyamid 66 verzichtet werden.

In einer bevorzugten Ausführungsform ist das Polycaprolactam PA 6.

Es hat sich als vorteilhaft erwiesen, wenn das verwendete Polycaprolactam eine bestimmte Viskosität nicht unterschreitet. Daher weist das verwendete Polycaprolactam in einer bevorzugten Ausführungsform der vorliegenden Erfindung eine Viskositätszahl von 100 bis 200 cm³/g, vorzugsweise 130 bis 180 cm³/g auf, bestimmt gemäß ISO 307 bei 25°C in Schwefelsäure (96%).

In einer weiterhin bevorzugten Ausführungsform weist das verwendete Polypropylen einen Fließindex (MFR) von 0,3 bis 50 g/10 min (230/2,16) auf, bestimmt gemäß ISO 1133.

Um die Herstellung des Bauteils zu erleichtern, können der Formmasse weiterhin Verträglichkeitsvermittler zugesetzt werden. Als Verträglichkeitsvermittler werden in der Regel Verbindungen bezeichnet, die eine Mischung miteinander nicht mischbarer Polymere ermöglichen. Geeignete Verbindungen sind beispielsweise in Bucknall, C.; Paul, D.R. Polymer Blends, Formulation and Performance; JohnWiley and Sons: New York, NY, USA, 2000 *und* Polymer Blends Handbook; Utracki, L.A., Wilkie, C.A., Eds.; Springer: Dordrecht, The Netherlands, 2014 beschrieben und dem Fachmann hinlänglich bekannt. Die Verwendung ungesättigter gepfropfter Co- bzw. Terpolymere als Verträglichkeitsvermittler ist bekannt aus EP2004716448. In einer bevorzugten Ausführungsform beträgt der Anteil an Verträglichkeitsvermittlern in der verwendeten Formmasse vorzugsweise 0,5 bis 7 Gew.-%, bezogen auf das Gesamtgewicht der Formmasse. Besonders bevorzugt ist der Verträglichkeitsvermittler ausgewählt aus der Gruppe bestehend aus Polypropylen Homo- oder Copolymer gepfropft mit Maleinsäureanhydrid mit einem Gehalt von Maleinsäureanhydrid zwischen 0,5 bis 2,0 Gew.-% bezogen auf das Molekulargewicht des Verträglichkeitsvermittlers.

Im Rahmen der vorliegenden Erfindung wurde überraschend gefunden, dass durch eine geeignete Auswahl des Polypropylens auf die Verwendung von Verträglichkeitsvermittlern verzichtet werden kann. Als geeignete Polypropylene haben sich insbesondere solche herausgestellt, die mit funktionellen Gruppen gepfropft sind. In einer bevorzugten Ausführungsform der vorliegenden Erfindung handelt es sich bei dem Polypropylen daher um ein mit mindestens einer funktionellen Gruppe gepfropftes Polypropylen, wobei die mindestens eine funktionelle Gruppe vorzugsweise ausgewählt ist aus der Gruppe bestehend aus Anhydrid-, Epoxy-, Amino- und Carbonsäuregruppen sowie Mischungen davon. Hierbei ist darauf zu achten, dass ein wesentlich geringerer Grad der Funktionalisierung als für Verträglichkeitsvermittler üblich ausgewählt wird. Als besonders geeignet erwiesen hat sich ein Anteil an funktionellen Gruppen von 0,05 bis 0,5 Gew.-%, bezogen auf das Gesamtgewicht de Polypropylens.

Um dem Bauteil die erforderliche Festigkeit und Formstabilität zu verleihen, enthält die zu seiner Herstellung verwendete Formmasse mindestens einen Verstärkungsstoff. Vorzugsweise handelt es sich bei diesem Verstärkungsstoff um einen Verstärkungsstoff, der ausgewählt ist aus der Gruppe bestehend aus Schnittglasfasern oder Endlosglasfasern (Rovings) bestehend aus E-, AR-, C-, D-, M-, R- und/oder S-Glas mit entweder kreisförmigem Querschnitt (Filamentquerschnitt: 6 bis 17 µm) oder ovalem Querschnitt (Hauptquerschnitt: 6 bis 20 µm, Nebenquerschnitt: 3 bis 15 µm), welche beschichtet sein können; Kohlefasern mit einem Filamentquerschnitt von 4 bis 15 µm, welche sowohl unbeschichtet als auch beschichtet sein können; partikelförmigen Glasverstärkungsstoffen wie Glasflakes und Glaskugeln, bestehend aus Kalk-Natron-Glas oder E-, AR-, C-, D-, M-, R- und/oder S-Glas, welche beschichtet sein können; und Glimmer. Das als Verstärkungsstoff verwendete Glimmer wird auch als Muscovit oder Phlogopit bezeichnet. Für einzelne Anwendungen kann es vorteilhaft sein, Mischungen dieser Verstärkungsstoffe einzusetzen. Bei den beschichteten Verstärkungsstoffen handelt es sich vorzugsweise um solche die mit einer Schlichte beschichtet sind. Im Rahmen der vorliegenden Erfindung wird unter Schlichte ein Überzugsstoff verstanden, der insbesondere ausgewählt ist aus Organischen Silanverbindungen, Ethylenvinylacetat, Polyester, Epoxidharz, Polyurethan und Stärke, wobei zusätzlich weitere Stoffe wie Emulgatoren und Benetzungsmittel enthalten sind. Der Gewichtsanteil der Schlichte beträgt vorzugsweise 0,1 bis 2,5 Gew.-%, besonders bevorzugt 0,2 bis 1,8 Gew.-%, bezogen auf das Gewicht des Verstärkungsstoffes.

Um die Hydrolysebeständigkeit des erfindungsgemäßen Bauteils zu verbessern, werden der zu seiner Herstellung verwendeten Formmasse weiterhin Hydrolysestabilisatoren beigefügt. Die Menge an Hydrolysestabilisatoren beträgt 0,2 bis 3 Gew.-%, jeweils bezogen auf das Gesamtgewicht der Formmasse. Die eigesetzten Hydrolysestabilisatorer sind ausgewählt aus der Gruppe bestehend aus Carbodiimiden, primären oder sekundären Aminen und Mischungen davon.

Zur weiteren Verbesserung der Hydrolysebeständigkeit der Bauteile hat es sich als nützlich erwiesen, zusätzlich zu dem Polycaprolactam weitere Polyamide einzusetzen.

In einer bevorzugten Ausführungsform weist die für die Herstellung des erfindungsgemäßen Bauteils verwendete Formmasse weiterhin teilkristalline Copolyamide auf, vorzugsweise Polyamid 610, basierend auf den Monomeren Hexamethylendiamin und Sebazinsäure, und/oder Polyamid 612, basierend auf Hexamethylendiamin und Dodecandisäure. Die für die Bauteilherstellung eingesetzte Formmasse enthält bezogen auf das Gesamtgewicht der Formmasse bevorzugt eine Menge von 0,1 bis 15 Gew.-% teilkristalline Copolyamide, besonders bevorzugt 1 bis 10 Gew.-%.

Die teilkristallinen Copolyamide weisen bevorzugt eine Viskositätszahl von 115 bis 200 cm³/g, besonders bevorzugt von 130 bis 180 cm³/g auf, bestimmt gemäß ISO 307 bei 25°C in Schwefelsäure (96%). Zur Einstellung der mechanischen und thermischen Eigenschaften des Bauteils können der zu seiner Herstellung verwendeten Formmasse weiterhin verschiedene Additive zugesetzt werden, wobei die Menge an Additiven in der Formmasse bevorzugt 0,1 bis 2,5 Gew.-% beträgt, bezogen auf das Gesamtgewicht der Formmasse. Die Additive sind dabei vorzugsweise ausgewählt aus der Gruppe bestehend aus organischen Stabilisatoren wie Phenolen, Phosphiten, Phosphonaten oder Aminen oder anorganischen Stabilisatoren wie Kupfer(I)-Salzen oder -Komplexen, Mangan(II) und Mangan(IV)-Verbindungen, Eisen-, Zink- und Manganpartikeln oder Alkalimetallhalogeniden und Gleit- und Entformungshilfsmittel wie Salze von Fettsäuren, Fettsäureesterwachse, Polyethylenwachse, Polypropylenwachse oder Amidwachse und Nukleierungsmittel wie Alkali oder Erdalkalimetallphosphate, Siliziumdioxid oder Talkum. Eine ausführliche Übersicht geeigneter Kunststoffadditive findet sich in Gächter, R.; Müller, H.; Handbuch der Kunststoff-Additive; 3. Ausgabe, 1989; Carl Hanser Verlag, Münch*en,*

In einer bevorzugten Ausführungsform umfasst die zur Herstellung des erfindungsgemäßen Bauteils verwendete Formmasse weiterhin anorganische oder organische Färbemittel. Vorzugsweise beträgt der Anteil der Färbemittel an der Formmasse dabei 0,1 bis 2 Gew.-%, besonders bevorzugt 0,3 bis 1,5 Gew.-%, jeweils bezogen auf das Gesamtgewicht der Formmasse. Die eingesetzten Färbemittel sind dabei vorzugsweise ausgewählt aus der Gruppe bestehend aus Ruß, Nigrosin, Eisenoxiden, Perinonen, Perylenen, Chinacridonen, Anthrachinonen, und Phtalocyaninen.

Das erfindungsgemäße Bauteil ist mittels herkömmlicher Herstellungsverfahren zugänglich. In einer bevorzugten Ausführungsform wird das Bauteil durch Spritzgießen, Extrudieren oder Blasformen der Formmasse hergestellt.

Das erfindungsgemäße Bauteil ist besonders für die Verwendung in Kühlkreisläufen, insbesondere in Automobilen geeignet. Daher handelt es sich bei dem Bauteil vorzugsweise um ein kühlmittelführendes Bauteil, das vorzugsweise im Kühlkreislauf eines Automobils verwendet wird. Vorzugsweise ist das Bauteil ausgewählt aus der Gruppe bestehend aus Kühlwasserrohren, Kühlwasserschläuchen, Verbindungselementen dafür, Kühlwasserverteiler, Kühlwasserbehälter, Kühlwasserausgleichsbehälter, Thermostatgehäusen und Wärmetauschergehäusen.

Ein weiterer Gegenstand der vorliegenden Erfindung ist die Verwendung des erfindungsgemäßen Bauteils als kühlmittelführendes Bauteil, insbesondere im Kühlkreislauf eines Automobils.

Ein weiterer Gegenstand der vorliegenden Erfindung ist die Verwendung einer Formmasse enthaltend
A. 20 bis 85 Gew.-% eines Polycaprolactams;
B. 5 bis 35 Gew.-% eines Polypropylens; und
C. 5 bis 65 Gew.-% eines Verstärkungsstoffes, dadurch gekennzeichnet, dass die Formmasse weiterhin Hydrolysestabilisatoren in einer Menge von 0,2 bis 3 Gew.-% enthält, wobei die Hydrolysestabilisatoren ausgewählt sind aus der Gruppe bestehend aus Carbodiimide und primären oder sekundären Aminen,
wobei sich die Angaben der Gew.-% jeweils auf das Gesamtgewicht der Formmasse beziehen, zur Herstellung eines Bauteils, vorzugsweise eines kühlmittelführenden Bauteils.

Im Folgenden sind Beispiele nicht gemäß der Erfindung aufgeführt, welche Bauteile auf Basis von Polyamid 6 zeigen.

### Beispiele:

| | Vergleich | Beispiel 1 | Beispiel 2 | Beispiel 3 | Beispiel 4 |
|---|---|---|---|---|---|
| Polyamid 6 ¹⁾ | 67,5% | 43,25% | 44,75% | 43,25% | 44,75% |
| Polypropylen | 0% | 21,5% ²⁾ | 21,5% ²⁾ | 21,5% ³⁾ | 21,5% ³⁾ |
| Verträglichkeitsvermittler⁴⁾ | 0% | 3% | 3% | 3% | 3% |
| Glasfaser ⁵⁾ | 30% | 30% | 30% | 30% | 30% |
| Additive | 1% | 0,75% | 0,75% | 0,75% | 0,75% |
| Farbmittel | 1,5% | 1,5% | 0% | 1,5% | 0% |
| Biegefestigkeit | 265MPa | 200MPa | 205MPa | 215MPa | 220MPa |
| Biegefestigkeit nach Lagerung | 11MPa | 27MPa | 32MPa | 30MPa | 36MPa |

| | | | | | |
|---|---|---|---|---|---|
| 1) Mittelviskoses Polyamid 6 mit einer Viskositätszahl von ca. 145cm³/g in konz. Schwefelsäure, erhältlich von ATT als Alphalon 27C, 2) Polypropylen Copolymer, erhältlich von LyondellBasell als Moplen EP300K, 3) Polypropylen Homopolymer erhältlich von LyondellBasell als Moplen HP2636, 4) Maleinsäureanhydrid-gepfropftes Polypropylen, erhältlich von Exxon Deutschland als Exxelor PO 1020, 5) Schnittglasfaser erhältlich von Electric Glass Fiber NL B.V. als Chopvantage HP 3550 EC-10 3,8MM | | | | | |

Die Eignung thermoplastischer Polymermischungen enthaltend Polycaprolactam und der daraus hergestellten Bauteile für eine Verwendung im Kühlkreislauf eines Automobils wurde anhand der Biegefestigkeit nach Lagerung von Normprüfkörpern im Kühlmittel(G12evo)/Wasser-Gemisch (50/50) für eine Zeitdauer von 1000 Stunden bei einer Temperatur von 135 °C getestet. Eignungskriterium ist eine Biegefestigkeit (gemessen nach ISO 178) von mindestens 25MPa nach erfolgter Lagerung.

## Patentansprüche

1. Kühlmittelführendes Bauteil, **dadurch gekennzeichnet, dass** das Bauteil hergestellt ist aus einer Formmasse, wobei die Formmasse umfasst:
A. 20 bis 85 Gew.-% eines Polycaprolactams;
B. 5 bis 35 Gew.-% eines Polypropylens; und
C. 5 bis 65 Gew.-% eines Verstärkungsstoffes,
**dadurch gekennzeichnet, dass** die Formmasse weiterhin Hydrolysestabilisatoren in einer Menge von 0,2 bis 3 Gew.-% enthält, wobei die Hydrolysestabilisatoren ausgewählt sind aus der Gruppe bestehend aus Carbodiimide und primären oder sekundären Aminen, und
wobei sich die Gewichtsangaben jeweils auf das Gesamtgewicht der Formmasse beziehen.

2. Bauteil gemäß Anspruch 1, **dadurch gekennzeichnet, dass** das Polypropylen einen Fließindex (MFR) von 0,3 bis 50 g/10 min (230/2,16) aufweist, bestimmt gemäß ISO 1133.

3. Bauteil gemäß wenigstens einem der vorhergehenden Ansprüche, **dadurch gekennzeichnet, dass** das Polycaprolactam eine Viskositätszahl von 100 bis 200 cm³/g, vorzugsweise 130 bis 180 cm³/g aufweist, bestimmt gemäß ISO 307 bei 25°C in Schwefelsäure (96%).

4. Bauteil gemäß wenigstens einem der vorhergehenden Ansprüche, **dadurch gekennzeichnet, dass** die Formmasse weiterhin Verträglichkeitsvermittler aufweist, vorzugsweise in einer Menge von 0,5 bis 7 Gew.-%, bezogen auf das Gesamtgewicht der Formmasse.

5. Bauteil gemäß Anspruch 4, **dadurch gekennzeichnet, dass** der Verträglichkeitsvermittler ausgewählt ist aus der Gruppe bestehend aus Polypropylen Homo- oder Copolymer gepfropft mit Maleinsäureanhydrid mit einem Gehalt von Maleinsäureanhydrid zwischen 0,5 bis1,5% bezogen auf das Molekulargewicht des Verträglichkeitsvermittlers.

6. Bauteil gemäß wenigstens einem der Ansprüche 1 bis 4, **dadurch gekennzeichnet, dass** es sich bei dem Polypropylen um ein mit funktionellen Gruppen gepfropftes Polypropylen handelt, wobei die funktionellen Gruppen vorzugsweise ausgewählt sind aus der Gruppe bestehend aus Anhydrid-, Epoxy-, Amino- und Carbonsäuregruppen.

7. Bauteil gemäß wenigstens einem der vorangehenden Ansprüche, **dadurch gekennzeichnet, dass** die Formmasse teilkristalline Copolyamide aufweist, vorzugsweise Polyamid 610, basierend auf den Monomeren Hexamethylendiamin und Sebazinsäure, und/oder Polyamid 612, basierend auf Hexamethylendiamin und Dodecandisäure.

8. Bauteil gemäß wenigstens einem der vorangehenden Ansprüche, **dadurch gekennzeichnet, dass** das Bauteil durch Spritzgießen, Extrudieren oder Blasformen der Formmasse hergestellt wird.

9. Bauteil gemäß wenigstens einem der vorangehenden Ansprüche, **dadurch gekennzeichnet, dass** es sich bei dem Bauteil um ein kühlmittelführendes Bauteil im Kühlkreislauf eines Automobils handelt.

10. Bauteil gemäß wenigstens einem der vorangehenden Ansprüche, **dadurch gekennzeichnet, dass** das Bauteil ausgewählt ist aus der Gruppe bestehend aus Kühlwasserohren, Kühlwasserschläuchen, Verbindungselementen dafür, Kühlwasserverteiler, Kühlwasserbehälter, Kühlwasserausgleichsbehältern, Thermostatgehäusen und Wärmetauschergehäusen.

11. Verwendung eines Bauteils gemäß wenigstens einem der Ansprüche 1 bis 12 im Kühlkreislauf eines Automobils.

12. Verwendung einer Formmasse enthaltend
A. 20 bis 85 Gew.-% eines Polycaprolactams (PA 6);
B. 5 bis 35 Gew.-% eines Polypropylens; und
C. 5 bis 65 Gew.-% eines Verstärkungsstoffes
**dadurch gekennzeichnet, dass** die Formmasse weiterhin Hydrolysestabilisatoren in einer Menge von 0,2 bis 3 Gew.-% enthält, wobei die Hydrolysestabilisatoren ausgewählt sind aus der Gruppe bestehend aus Carbodiimide und primären oder sekundären Aminen,
wobei sich die Gewichtsangaben jeweils auf das Gesamtgewicht der Formmasse beziehen, zur Herstellung eines eines kühlmittelführenden Bauteils.

## Claims

1. A coolant-circulating component, **characterized in that** said component is prepared from a molding composition, said molding composition comprising:
A. from 20 to 85% by weight of a polycaprolactam;
B. from 5 to 35% by weight of a polypropylene; and
C. from 5 to 65% by weight of a reinforcing material;
**characterized in that** said molding composition further includes hydrolysis stabilizers in an amount of 0.2 to 3% by weight, wherein said hydrolysis stabilizers are selected from the group consisting of carbodiimides, and primary or secondary amines, and
wherein each of the weight percentages is based on the total weight of the molding composition.

2. The component according to claim 1, **characterized in that** said polypropylene has a melt flow rate (MFR) of 0.3 to 50 g/10 min (230/2.16) as determined according to ISO 1133.

3. The component according to at least one of the preceding claims, **characterized in that** said polycaprolactam has a viscosity number of 100 to 200 cm³/g, preferably 130 to 180 cm³/g, as determined according to ISO 307 at 25 °C in sulfuric acid (96%).

4. The component according to at least one of the preceding claims, **characterized in that** the molding composition further includes compatibilizers, preferably in an amount of from 0.5 to 7% by weight, based on the total weight of the molding composition.

5. The component according to claim 4, **characterized in that** said compatibilizer is selected from the group consisting of polypropylene homo- or copolymer grafted with maleic anhydride with a content of maleic anhydride of from 0.5 to 1.5% by weight, based on the molecular weight of the compatibilizer.

6. The component according to at least one of claims 1 to 4, **characterized in that** said polypropylene is a polypropylene grafted with functional groups, wherein said functional groups are preferably selected from the group consisting of anhydride, epoxy, amino and carboxylic acid groups.

7. The component according to at least one of the preceding claims, **characterized in that** said molding composition includes partially crystalline copolyamides, preferably polyamide 610 based on the monomers hexamethylene diamine and sebacic acid, and/or polyamide 612 based on hexamethylene diamine and dodecanedioic acid.

8. The component according to at least one of the preceding claims, **characterized in that** said component has been prepared by injection molding, extruding, or blow molding the molding composition.

9. The component according to at least one of the preceding claims, **characterized in that** said component is a coolant-circulating component in the cooling circuit of an automobile.

10. The component according to at least one of the preceding claims, **characterized in that** said component is selected from the group consisting of cooling water pipes, cooling water flexible tubes, connecting elements for them, cooling water manifolds, cooling water containers, cooling water compensation containers, thermostat housings, and heat exchanger housings.

11. Use of a component according to at least one of claims 1 to 12 in the cooling circuit of an automobile.

12. Use of a molding composition comprising:
A. from 20 to 85% by weight of a polycaprolactam (PA 6);
B. from 5 to 35% by weight of a polypropylene; and
C. from 5 to 65% by weight of a reinforcing material;
**characterized in that** said molding composition further includes hydrolysis stabilizers in an amount of 0.2 to 3% by weight, wherein said hydrolysis stabilizers are selected from the group consisting of carbodiimides, and primary or secondary amines,
wherein each of the weight percentages is based on the total weight of the molding composition, for preparing a coolant-circulating component.

## Revendications

1. Composant parcouru de réfrigérant, **caractérisé en ce que** ledit composant est préparé à partir d'un matériau de moulage, ledit matériau de moulage incluant :
A. de 20 à 85 % en poids d'un polycaprolactame,
B. de 5 à 35 % en poids d'un polypropylène, et
C. de 5 à 65 % en poids d'une matière de renforcement,
**caractérisé en ce que** ledit matériau de moulage contient en outre des stabilisants à l'hydrolyse en une quantité de 0,2 à 3 % en poids, dans lequel lesdits stabilisants à l'hydrolyse sont choisis dans le groupe consistant en carbodiimides et amines primaires ou secondaires, et
dans lequel les pourcentages en poids sont respectivement par rapport au poids total dudit matériau de moulage.

2. Composant selon la revendication 1, **caractérisé en ce que** ledit polypropylène présente un indice de fluidité (MFR) de 0,3 à 50 g/10 min (230/2,16), tel que déterminé selon ISO 1133.

3. Composant selon au moins l'une des revendications précédentes, **caractérisé en ce que** ledit polycaprolactame présente un indice de viscosité de 100 à 200 cm³/g, de préférence 130 à 180 cm³/g, tel que déterminé selon ISO 307 à 25°C en acide sulfurique (96 %).

4. Composant selon au moins l'une des revendications précédentes, **caractérisé en ce que** ledit matériau de moulage contient en outre des agents de compatibilisation, de préférence en une quantité de 0,5 à 7 % en poids, par rapport au poids total dudit matériau de moulage.

5. Composant selon la revendication 4, **caractérisé en ce que** ledit agent de compatibilisation est choisi dans le groupe consistant en homopolymères ou copolymères de polypropylène greffés avec l'anhydride maléique, avec une teneur de l'anhydride maléique entre 0,5 et 1,5 %, par rapport au poids moléculaire de l'agent de compatibilisation.

6. Composant selon au moins l'une des revendications 1 à 4, **caractérisé en ce que** ledit polypropylène est un polypropylène greffé avec des groupes fonctionnels, dans lequel lesdits groupes fonctionnels sont de préférence choisis dans le groupe consistant en groupes anhydride, epoxy, amino, et acide carboxylique.

7. Composant selon au moins l'une des revendications précédentes, **caractérisé en ce que** ledit matériau de moulage comprend des copolyamides partiellement crystallines, de préférence du polyamide 610, basé sur les monomères hexaméthylènediamine, et l'acide sébacique, et/ou du polyamide 612, basé sur l'hexaméthylènediamine et le diacide dodécanique.

8. Composant selon au moins l'une des revendications précédentes, **caractérisé en ce que** ledit composant est préparé par moulage par injection, extrusion ou formage par soufflage dudit matériau de moulage.

9. Composant selon au moins l'une des revendications précédentes, **caractérisé en ce que** ledit composant est un composant parcouru de réfrigérant dans le circuit de refroidissement d'une automobile.

10. Composant selon au moins l'une des revendications précédentes, **caractérisé en ce que** ledit composant est choisi dans le groupe consistant en conduites d'eau de refroidissement, tuyaux d'eau de refroidissement, éléments de raccord pour les derniers, distributeurs d'eau de refroidissement, réservoirs d'eau de refroidissement, réservoirs de compensation, boîtiers de thermostat, et boîtiers d'échangeurs de chaleur.

11. Utilisation d'un composant selon au moins l'une des revendications 1 à 12 dans le circuit de refroidissement d'une automobile.

12. Utilisation d'un matériau de moulage contenant
A. de 20 à 85 % en poids d'un polycaprolactame (PA 6),
B. de 5 à 35 % en poids d'un polypropylène, et
C. de 5 à 65 % en poids d'une matière de renforcement,
**caractérisé en ce que** ledit matériau de moulage contient en outre des stabilisants à l'hydrolyse en une quantité de 0,2 à 3 % en poids, dans lequel lesdits stabilisants à l'hydrolyse sont choisis dans le groupe consistant en carbodiimides et amines primaires ou secondaires,
dans lequel les pourcentages en poids sont respectivement par rapport au poids total dudit matériau de moulage, pour la production d'un composant parcouru de réfrigérant.
